Europäisches Patentamt

(19) European Patent Office

Office européen des brevets

(11) Veröffentlichungsnummer: **0 042 194**
**B1**

(12) **EUROPÄISCHE PATENTSCHRIFT**

(45) Veröffentlichungstag der Patentschrift:
12.09.84

(51) Int. Cl.³: **G 06 F 11/22**, G 01 R 31/00

(21) Anmeldenummer: 81200647.6

(22) Anmeldetag: **12.06.81**

(54) **Dateneingabe- oder Ausgabegerät mit Funktionsprüfung.**

(30) Priorität: **14.06.80 DE 3022371**

(43) Veröffentlichungstag der Anmeldung:
**23.12.81 Patentblatt 81/51**

(45) Bekanntmachung des Hinweises auf die Patenterteilung:
**12.09.84 Patentblatt 84/37**

(84) Benannte Vertragsstaaten:
**DE FR GB IT SE**

(56) Entgegenhaltungen:
DE - A - 2 548 235
DE - B - 2 728 666
US - A - 3 711 691
US - A - 3 787 670
US - A - 3 813 647

IBM TECHNICAL DISCLOSURE BULLETIN, Band 21,
Heft 3, August 1978, NEW YORK (US) R.C. GREENE et
al.: "Pick-Time Detector For Typewriter Magnets",
Seiten 1109-1110

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **FR GB IT SE**

(72) Erfinder: **Von Osten, Reimer, Am Siegenstein 9,
D-5900 Siegen 31 (DE)**

(74) Vertreter: **Poddig, Dieter et al, Philips Patentverwaltung
GmbH Billstrasse 80 Postfach 10 51 49,
D-2000 Hamburg 28 (DE)**

**Beschreibung**

Die Erfindung betrifft ein Dateneingabe- oder Ausgabegerät für eine zentrale Datenverarbeitungsanlage, mit elektromechanischen Elementen, mit einer elektronischen Steuereinrichtung zum Austausch von Daten und Steuersignalen mit der zentralen Verarbeitungsanlage und zum Erzeugen von internen Steuersignalen zur Ansteuerung der elektromechanischen Elemente und mit einem Stromversorgungsgerät zur Lieferung der elektrischen Energie für die elektromechanischen Elemente, wobei für die Prüfung der elektromechanischen Elemente die Steuereinrichtung für ein elektromechanisches Element ein Ansteuersignal erzeugt und zumindest zu einem definierten Zeitpunkt nach dem Ansteuersignal einen Messwert einer Messeinrichtung übernimmt, mit mindestens einem Referenzwert vergleicht und bei vorgegebener Abweichung des gespeicherten Messwertes von dem Referenzwert ein Fehlersignal erzeugt.

Bei elektronischen Datenverarbeitungsanlagen ist es bekannt, automatische Funktionsprüfungen der elektronischen Teile durchzuführen, indem insbesondere beim Einschalten der Anlage ein Prüfprogramm durchgeführt wird. Dadurch sind bei solchen elektronischen Anlagen ausser dem Prüfprogramm bzw. dem Platz dafür im Programmspeicher keine oder nur sehr wenig zusätzliche Einrichtungen notwendig, um eine vollständige Prüfung und deren Auswertung durchzuführen.

Eine automatische Funktionsprüfung von Dateneingabe- oder Ausgabegeräten mit elektromechanischen Elementen der oben genannten Art ist bekannt aus der US-PS 3 711 691. Darin wird am Beispiel einer Magnetbandeinheit beschrieben, dass einer Einrichtung mit mechanischer Bewegung ein Steuersignal zugeführt wird und danach Signale, die die mechanische Bewegung angeben, wie z.B. Tachometersignale, und durch die Bewegung bestimmungsgemäss erzeugte Datensignale parallel erfasst und miteinander in Beziehung gesetzt werden, insbesondere verglichen werden. Bei bestimmten Abweichungen werden Fehlermeldungen erzeugt. Der Vergleich und die Erzeugung von Fehlermeldungen bzw. Zustandsmeldungen für die zentrale Datenverarbeitungsanlage werden in der Steuereinrichtung durchgeführt. Diese Massnahmen zur Prüfung erfordern jedoch, dass die Einrichtung mit mechanischer Bewegung zwei unterschiedliche Arten von Signalen erzeugt, die voneinander eine gewisse Unabhängigkeit haben. Dies ist jedoch bei vielen anderen Einrichtungen mit mechanischer Bewegung nicht ohne weiteres der Fall, und die Ausrüstung solcher Einrichtungen mit Mitteln zum Erzeugen solcher zusätzlichen Signale erfordert, wenn sie überhaupt möglich ist, zusätzlichen Aufwand und erhöht die Fehlerwahrscheinlichkeit.

Ferner ist eine Einrichtung zum Prüfen eines angeschlossenen Gerätes bekannt aus der US-PS 3 813 647. Dieses angeschlossene Gerät kann auch ein elektromechanisches Gerät für die Datenverarbeitung sein, wobei das Prüfgerät jedoch eine eigene Prüfsteuereinrichtung aufweist, die Ansteuersignale erzeugt und Messignale verarbeitet. Diese Messignale stammen von einer Vielzahl von Messpunkten an dem zu prüfenden Gerät. Dadurch sind an dem zu prüfenden Gerät zusätzliche Massnahmen notwendig, die die Kosten erhöhen und die Zuverlässigkeit verringern.

Aufgabe der Erfindung ist es daher, ein Dateneingabe- oder Ausgabegerät der eingangs genannten Art anzugeben, bei der eine Prüfung der elektromechanischen Elemente auf Funktionsfähigkeit automatisch erfolgt, ohne dass die Zuverlässigkeit der gesamten Anlage dadurch nennenswert verschlechtert wird. Diese Aufgabe wird erfindungsgemäss dadurch gelöst, dass die Messeinrichtung ein Messelement enthält, das einen dem Stromversorgungsgerät entnommenen Versorgungsstrom misst und Messwerte angibt.

Es ist also nur ein zusätzliches Element notwendig, nämlich das Messelement für den Strom bzw. die Stromaufnahme bei der Betätigung der elektromechanischen Elemente, wodurch die Zuverlässigkeit des Gerätes nicht nennenswert verändert wird und andererseits eine weitgehende Prüfung mit sehr geringem Kostenaufwand möglich ist.

Es ist möglich, dass der Prüfvorgang von verschiedenen Ruhe-Betriebszuständen ausgeht, bei denen von dem Stromversorgungsgerät auch verschiedene Ruheströme aufgenommen werden, denen sich dann der Strom durch die Ansteuerung eines elektromechanischen Elementes zur Prüfung überlagert, so dass dann bei dem gleichen Ansteuersignal in verschiedenen Prüfzyklen verschiedene Messwerte entstehen. Ebenso ist es möglich, dass sich der durch ein Ansteuersignal zum Prüfen erzeugte zusätzliche Strom nur wenig von dem Ruhestrom unterscheidet, so dass der Absolutwert des Stromes unter Umständen wenig bzw. ungenaue Aussage über die Funktion des geprüften Elementes liefert. Aus diesem Grunde ist es zweckmässig, dass die Steuereinrichtung den Messwert der Messeinrichtung unmittelbar vor und nach dem Ansteuersignal übernimmt und die Differenz zwischen den zwei gemessenen Messwerten mit einem gespeicherten Differenzwert vergleicht. Durch die Differenzbildung zwischen dem Stromwert zu einem bestimmten Zeitpunkt nach der Ansteuerung wird also genau die durch die Ansteuerung hervorgerufene Stromänderung ermittelt, die dann genauer mit einem Referenzwert verglichen werden kann.

In Dateneingabe- oder Ausgabegeräten sind häufig sehr verschiedene elektromechanische Elemente enthalten, die beispielsweise in bezug auf ihre Ansprechgeschwindigkeit sehr unterschiedlich sein können. Es ist daher zweckmässig, dass die Steuereinrichtung für mindestens einige elektromechanische Elemente ein derart kurzzeitiges Ansteuersignal erzeugt, dass eine gegenüber mechanischen Zustandsänderungen im normalen Betrieb nur unwesentliche mechanische Zustandsänderung des betreffenden Elementes hervorgerufen wird. Durch den Stromverlauf während einer solchen kurzen Betätigung kann zumindest eindeutig festgestellt werden, ob ein derartiges Element elektrisch in Ordnung ist, d.h. ob beispielsweise ein Drahtbruch oder ein Kurzschluss vorliegt, und meistens kann daraus auch auf die grundsätzliche mechanische Funktionsfähigkeit geschlossen werden, da bei einer mechanischen Blockierung bzw. einem mechanischen Bruch sich der zeitliche Verlauf des Stroms bereits am Anfang gegenüber einem intakten Element ändern wird.

Meist verfügen elektromechanische Elemente über einen aktiven Zustand und einen Ruhezustand. Jedem Zustand ist ein bestimmter Stromwert zugeordnet. Vorzugsweise ist ein Dateneingabe- oder Ausgabegerät nach der Erfindung dadurch gekennzeichnet, dass die Steuereinrichtung den Messwert der Messeinrichtung unmittelbar vor und nach dem Ansteuersignal übernimmt und die Differenz zwischen den zwei gemessenen Messwerten mit einem gespeicherten Differenzwert vergleicht. Durch die Bestimmung der Differenz zwischen dem Stromwert im Ruhezustand und im aktiven Zustand und durch den Vergleich dieser Differenz mit einem in den Speicher eingeschriebenen Differenzwert ist es möglich, die Untersuchung mit höherer Genauigkeit durchzuführen.

Oft sind auch elektromechanische Elemente vorhanden, bei denen eine Bewegung in zwei zueinander entgegengesetzten Richtungen steuerbar ist, beispielsweise die Positionierung eines Hebels als Träger eines Magnetkopfs zum Schreiben und/oder Lesen einer Magnetscheibe. Hierbei ist es zweckmässig, dass die Steuereinrichtung für mindestens einige elektromechanische Elemente nach der Übernahme der Messwerte ein weiteres Ansteuersignal erzeugt, das eine Bewegung des betreffenden elektromechanischen Elements in die Lage vor dem ersten Ansteuersignal auslöst. In diesen Fällen ist eine vollständige Funktionsprüfung möglich, ohne dass nach Abschluss der Prüfung eine Zustandsänderung gegenüber dem Anfangszustand zurückbleibt.

Da bei den meisten elektromechanischen Elementen zwei grundsätzlich verschiedene Arten von Fehlern auftreten können, nämlich ein Bruch eines Drahtes bzw. eines kraftübertragenden mechanischen Teiles, wobei kein oder nur ein geringer Stromanstieg bei der Betätigung erfolgt, oder ein elektrischer Kurzschluss bzw. eine mechanische Blockierung, wodurch ein überhöhter Stromanstieg erfolgen wird, ist es zweckmässig, dass die Steuereinrichtung mindestens einen Teil der Messwerte jeweils mit zwei gespeicherten Referenzwerten vergleicht und für den einen Referenzwert bei Überschreitung und für den anderen Referenzwert bei Unterschreitung durch die betreffende Messwerte ein Fehlersignal erzeugt. Auf diese Weise können beide Arten von Fehlern auf sehr einfache Weise geprüft werden.

Die Steuereinrichtung eines Dateneingabe- oder Ausgabegerätes arbeitet üblicherweise rein digital. Um die automatische Funktionsprüfung der elektromagnetischen Elemente unter weitgehender Unterstützung durch die vorhandene Steuereinrichtung durchzuführen, ist es zweckmässig, dass dem Messelement ein Analog/Digital-Wandler nachgeschaltet ist und dass die Steuereinrichtung mindestens den unmittelbar vor einem Ansteuersignal übernommenen Messwert in einen digitalen Speicher einschreibt. Durch die Digitalwandlung der Messwerte ist eine besonders einfache Speicherung und auch weitere Verarbeitung möglich.

Da die Stromaufnahme der verschiedenen elektromechanischen Elemente sehr unterschiedlich sein kann, ist es zweckmässig, dass eine von der Steuereinrichtung gesteuerte Messbereichssteuerung das Messelement bzw. den Analog/Digital-Wandler auf einen bestimmten Messbereich einstellt. Auf diese Weise kann vor der Prüfung jedes elektromechanischen Elements jeweils der optimale Messbereich eingestellt werden, so dass eine sehr genaue Erfassung des Stroms bzw. der Stromänderung möglich ist.

Die Steuereinrichtung kann auf verschiedene Weise ausgeführt sein. So kann bei einfach aufgebauten Geräten mit sehr wenigen einfachen Funktionen eine fest verdrahtete Logikschaltung verwendet werden, die durch eine einfache Ablaufsteuerung gesteuert wird. Bei komplizierteren Geräten ist es jedoch zweckmässig, dass die Steuereinrichtung ein Mikroprozessor ist, der durch ein im Festwertspeicher gespeichertes Programm gesteuert wird. In diesem Falle kann der Festwertspeicher also sowohl für das Programm wie auch für die gespeicherten digitalen Referenzwerte verwendet werden, so dass für die Prüfung der elektromechanischen Elemente nur ein äusserst geringer zusätzlicher Aufwand notwendig ist.

Verschiedene elektromechanische Elemente mit insbesondere unterschiedlicher Ansprechgeschwindigkeit haben allgemein auch wesentlich unterschiedliche Änderungsgeschwindigkeiten der Stromaufnahme bei einem Betätigungssignal. Um die unterschiedlichen Elemente daher optimal prüfen zu können, ist es bei Verwendung eines Mikroprozessors als Steuereinrichtung aber zweckmässig, dass der Mikroprozessor nach jeder Übernahme eines Messwertes ein programmierbares Zeitglied ansteuert, das nach Ablauf der programmierten Zeitdauer ein Unterbrechungssignal zum Mikroprozessor überträgt und diesen veranlasst, den nächsten Strommesswert zu übernehmen bzw. ein anderes Steuersignal für ein anderes elektromechanisches Element zu erzeugen. Dadurch können die einzelnen Zeitabstände der Entnahme eines Strommesswertes bzw. der Folge der Betätigungssignale völlig unabhängig voneinander individuell günstig gewählt werden.

Ausführungsbeispiele der Erfindung werden nachstehend anhand der Zeichnung näher erläutert. Es zeigen

Fig. 1 eine Blockschaltung eines Geräts gemäss einem Ausführungsbeispiel der Erfindung,

Fig. 2a einen Druckkopf eines Matrixdruckers an der Berührungsseite mit dem Farbband und dem Papier,

Fig. 2b einen Schnitt durch diesen Druckkopf entlang der von der Linie 103 bestimmten Ebene,

Fig. 3 ein Ausführungsbeispiel eines Treiberelements, und

Fig. 4 ein Ausführungsbeispiel eines Messelements.

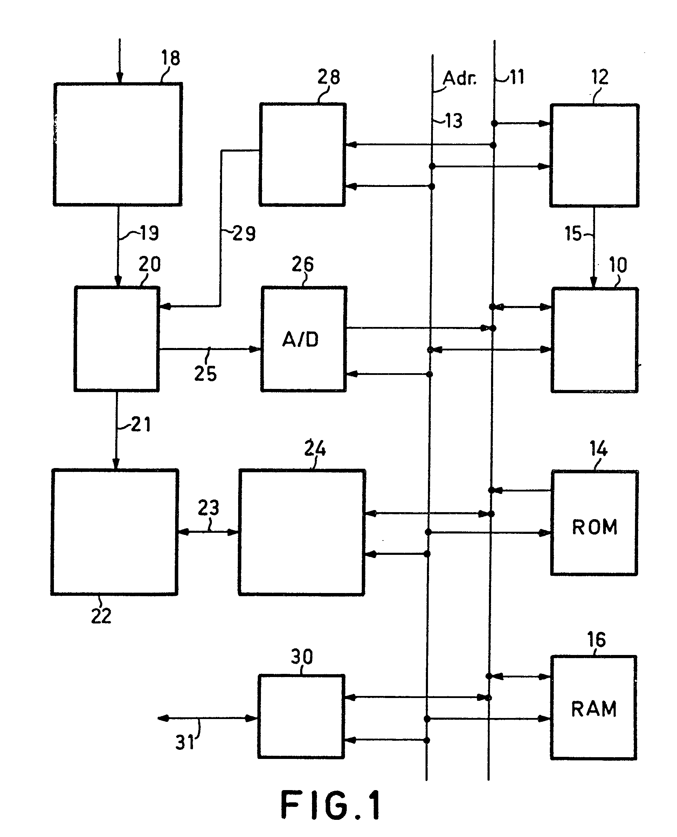

In Fig. 1 ist eine Blockschaltung eines Ausführungsbeispiels eines erfindungsgemässen Geräts dargestellt. Darin sind die wichtigsten Elemente angegeben, die untereinander durch eine Datensammelleitung 11 und eine Adressammelleitung 13 verbunden sind. Ein wesentliches Element stellt dabei die Steuereinrichtung 10 dar, die alle Funktionsabläufe und damit auch die Prüfvorgänge steuert.

Die elektromechanischen Elemente sind hier vereinfacht als ein Block 22 dargestellt, da der genaue Aufbau der Elemente für die hier beschriebene Erfindung nicht von Bedeutung ist. Die Elemente werden über die Leitung 19, das Messelement 20 und die Leitung 21 von der Stromversorgung 18 mit elektrischer Energie versorgt, wobei die Stromversorgung 18 an das Netz angeschlossen ist und insbesondere Gleichrichter und Siebglieder zur Erzeugung einer oder mehrerer Gleichspannungen enthält. Die elektromechanischen Elemente in dem Block 22 werden über die Leitung 23 von Treiberschaltungen angesteuert, die in dem Block 24 enthalten sind, der ausserdem noch beispielsweise Lageabtaster für die elektromechanischen Elemente wie den Druckkopf eines Druckers enthält, ferner beispielsweise Endlagenschalter und andere Elemente, die einen mechanischen Zustand in ein elektrisches Signal umsetzen. Der Block 24 ist an die Adressensammelleitung 13 und an die Datensammelleitung 11 angeschlossen und erhält von diesen die Steuersignale zur Ansteuerung der elektromagnetischen Elemente bzw. führt der Datensammelleitung 11 die aus den abgetasteten mechanischen Zuständen umgesetzten elektrischen Signale zu.

Die Speisung der übrigen Elemente ist der Deutlichkeit halber in der Zeichnung nicht dargestellt.

Das Messelement 20 wird über die Leitung 29 von der Messbereichssteuerung 28 angesteuert, um den für die Prüfung des jeweiligen elektromechanischen Elements günstigsten Messbereich einzuschalten, wie dies beispielsweise bei Digitalmessinstrumenten üblich ist. Auch die Messbereichssteuerung 28 ist an die Adressensammelleitung 13 und die Datensammelleitung 11 angeschlossen, wobei erstere beispielsweise diese Messbereichssteuerung bestimmt und über gleichzeitig oder darauffolgend anliegende Daten der Messbereich ausgewählt wird. Die Auswahl kann bei diesem wie auch bei einigen anderen Elementen auch durch einzelne, von der Steuereinrichtung 10 ausgehende zusätzliche Steuerleitungen erfolgen, die in der Figur nicht dargestellt sind.

Das Messelement 20 enthält im allgemeinen eine Anzahl Messwiderstände, die durch einen darin angeordneten Umschalter, der von der Messbereichsteuerung 28 angesteuert wird, entsprechend eingeschaltet werden. Da hier aber zuweilen Stromänderungen ausgewertet werden, kann es zweckmässig sein, zumindest bei einigen Messungen keine rein ohmschen Messelemente, sondern allgemein Impedanzen mit beispielsweise einem induktiven Anteil zu verwenden. Für den eigentlichen Betrieb nach Abschluss der Prüfung der elektromechanischen Elemente ist es gegebenenfalls zweckmässig, das Messelement durch einen Kurzschluss zu ersetzen, so dass von der Stromversorgung 18 gelieferte elektrische Energie möglichst vollständig die elektromechanischen Elemente 22 erreicht und dort möglichst niederohmig zur Verfügung steht.

An das Messelement 20 ist über die Leitung 25 ein Analog/Digital-Wandler 26 angeschlossen, der hier beispielsweise von der Adressensammelleitung 13 angesteuert wird, um ein in die digitale Form umgewandeltes Messignal abzugeben, das der Datensammelleitung 11 zugeführt wird. Mit Hilfe einer Spule ist es möglich, zeitliche Änderungen der Ströme $\{\frac{dI}{dt}\}$ zu messen.

An die Datensammelleitung 11 und die Adressensammelleitung 13 sind ferner ein Festwertspeicher (ROM) 14 und ein Schreib-Lese-Speicher (RAM) 16 angeschlossen sowie ein Zeitglied 12, dessen Ausgang über die Leitung 15 auf die Steuereinrichtung 10 führt. Die auf der Datensammelleitung 11 vorhandenen Daten stellen bei Auswahl des Zeitglieds dieses auf eine Zeitspanne ein, nach deren Ablauf von der Einstellung an auf der Leitung 15 ein Signal abgegeben wird. Das Zeitglied 12 besteht daher im wesentlichen aus einem Zähler und kann auch Bestandteil der Steuereinrichtung 10 sein, wobei es hier dann nur der Deutlichkeit halber getrennt dargestellt ist.

Schliesslich ist noch an die Sammelleitungen 11 und 13 eine Übertragerschaltung 30 angeschlossen, die über die Leitung 31 den Datenverkehr mit der zentralen Datenverarbeitungsanlage besorgt. Ein wesentlicher Teil der in dieser Figur dargestellten Leitungen, beispielsweise die Sammelleitungen 11 und 13, bestehen tatsächlich aus einer Anzahl paralleler einzelner Leitungen, die hier nur vereinfacht als eine Verbindung dargestellt sind.

Ein Ausführungsbeispiel der Prüfung der elektromechanischen Elemente ist nun in wiederholten Folgen nachstehender Funktionsschritte gegeben, die von der Steuereinrichtung 10 durch eine im Festwertspeicher 14 enthaltene Befehlsfolge gesteuert wird.

1. Messbereichsteuerung 28 ansteuern und einen bestimmten Messbereich bzw. ein bestimmtes Messelement 20 einschalten.

2. Analog/Digital-Wandler 26 ansteuern und den abgegebenen Digitalwert an einem bestimmten Speicherplatz im RAM-Speicher 16 abspeichern.

3. Ansteuersignal für einen bestimmten Treiber 24 erzeugen, der ein elektromechanisches Element 22 betätigt.

4. Zeitglied 12 auf eine bestimmte Zeit einstellen.

5. Gegebenenfalls Messbereichssteuerung 28 auf einen anderen Messbereich umschalten.

6. Nach dem Ausgangssignal des Zeitglieds wird wieder der Analog/Digital-Wandler 26 angesteuert und der abgegebene digitale Messwert in die Steuereinrichtung 10 übernommen.

7. Der vorher im RAM-Speicher 16 gespeicherte Messwert wird ausgelesen und in der Steuereinrichtung 10 von dem zuletzt gewonnenen Messwert subtrahiert.

8. Aus dem Festwertspeicher 14 wird ein bestimmter Differenzwert ausgelesen und in der Steuereinrichtung 10 mit der vorher gewonnenen Differenz verglichen.

9. Ein weiterer bestimmter Differenzwert wird aus dem Festwertspeicher 14 ausgelesen und ebenfalls in der Steuereinrichtung 10 mit der gewonnenen Messwertdifferenz verglichen. Der Vergleich kann in bekannter Weise durch Differenzbildung durchgeführt werden, wobei Überschreitung bzw. Unterschreitung des Wertes 0 als Überschreitung der zulässigen Abweichung gewertet wird.

10. Bei Überschreitung der zulässigen Abweichung wird entweder über die Übertragerschaltung 30 und die Leitung 31 ein Fehlersignal zur zentralen Datenverarbeitungsanlage oder über den bestimmten Treiber 24 ein Fehlersignal zum elektromechanischen Element 22 übertragen, welches Fehlersignal zum Beispiel eine Anzeigelampe aufleuchten lässt. Anderenfalls wird die Folge, beginnend mit dem Schritt 1) unter Verwendung entsprechend anderer Werte, erneut durchlaufen, so dass nacheinander alle elektromechanischen Elemente 22 geprüft werden.

Wenn bei der Betätigung eines elektromechanischen Elments mehrere aufeinanderfolgende Stromwerte gemessen werden sollen, schliesst sich an den Schritt 6) folgender Schritt an: 6a) Abspeichern des vom Analog/Digital-Wandler in die Steuereinrichtung 10 übernommenen Wertes in einen besonderen Speicherplatz im RAM-Speicher 16. Danach Rücksprung zum Schritt 4), gegebenenfalls diese Schleife eine vorbestimmte Anzahl Male durchlaufen, und zum Beispiel bei jedem Durchlauf den Zählstand eines gesetzten Zählers ändern. Beim Schritt 7) werden dann mehrere Differenzen gebildet, nämlich die Differenz jedes Messwertes mit dem zuerst gespeicherten Messwert, und diese mehreren Differenzwerte werden auch mit entsprechend vielen Differenzwerten aus dem Festwertspeicher 14 verglichen. Es können auch teilweise Differenzen von weiteren aufeinanderfolgenden Messwerten gebildet und mit im Festwertspeicher 14 gespeicherten Differenzwerten verglichen werden.

Es ist weiter möglich, Kurven, die die Stromänderungen zeitabhängig darstellen, zu messen und mit Referenzkurven zu vergleichen.

Das Messen zweier Werte und das Bestimmen der Differenz zwischen diesen zwei Werten ist nur eine Möglichkeit. Selbstverständlich ist die Möglichkeit gegeben, die Untersuchung der Wirkung eines elektromechanischen Elements durch die Messung nur eines Werts durchzuführen. Wenn beispielsweise die Wirkung des Vorschubmechanismus für das Papier in einem Drucker geprüft wird, ist die Messung eines einzigen Werts ausreichend. Der Strom durch den Motor zum Weiterdrehen der Antriebsrolle um einen Schritt liefert für dieses Beispiel genügend Information über die Wirkung des Papiervorschubmechanismus. Der gemessene Wert wird dabei von der Steueranordnung mit einem Referenzwert verglichen, der in den Speicher eingeschrieben ist.

Die unterschiedlichen, oben beschriebenen Funktionsschritte werden nachstehend anhand eines Ausführungsbeispiels näher erläutert. Als Ausführungsbeispiel wurde ein Druckkopf eines Matrixdruckers gewählt.

Hierzu ist in die Steuereinheit 10, z.B. einen Mikroprozessor, ein Programm aufgenommen, das beim Schreiben eines bestimmten Zeichens, beispielsweise des Buchstaben M, die unterschiedlichen, oben beschriebenen Funktionsschritte steuert.

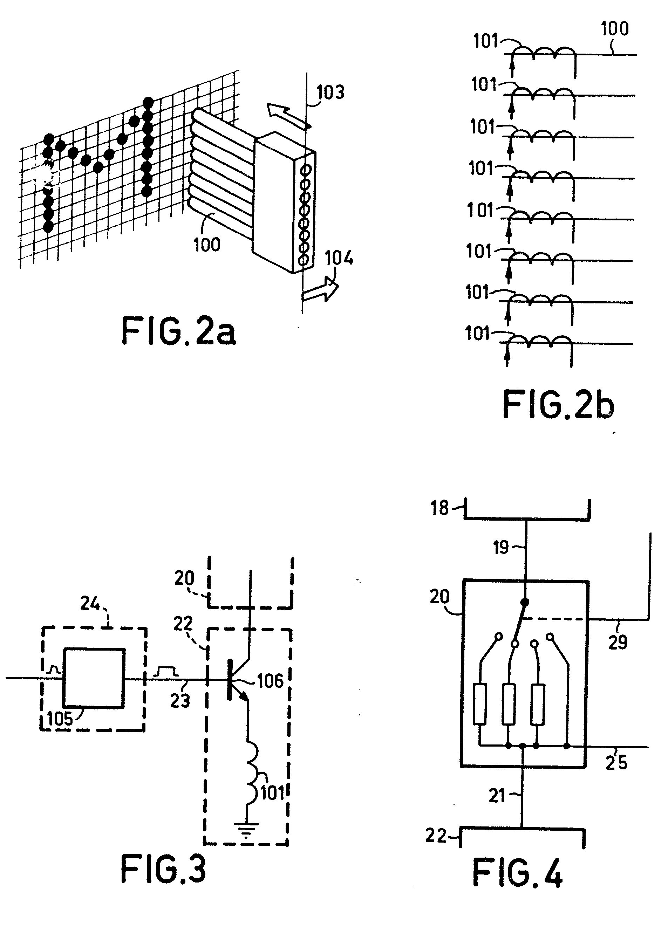

In Fig. 2a ist ein Druckkopf eines Matrixdruckers an der Berührungsseite mit einem Farbband und dem Papier dargestellt, und Fig. 2b zeigt einen Schnitt durch diesen Schreibkopf entlang der mit der Linie 103 angegebenen Ebene. Dieser Druckkopf enthält acht Nadeln 100, die in einer Spalte angeordnet sind. Eine jede dieser Nadeln befindet sich wenigstens teilweise im Kern einer Spule 101. Das Schreiben eines Zeichens erfolgt durch die schrittweise Bewegung des Druckkopfs in Richtung des Pfeiles 104 und durch das Durchfliessen der(jeniger) Spule(n) bei jedem Schritt mit einem Strom I, die ihre Nadel zum Papier hin bewegen muss (müssen), um das betreffende Zeichen zu schreiben. Jedem Zeichen ist ein bestimmter Strom $I_{kar}$ zugeordnet, der die Summe aller Ströme I zum Schreiben dieses Zeichens ist. So wird beispielsweise ein Strom $I_M$ zum Schreiben des Buchstaben M benötigt.

Zum Festhalten der Nadeln in ihrem Ruhezustand durchfliesst die Spulen meist ein geringer Strom $I_o$ (Ruhestrom). Die vom Magnetfeld der Spule 101 auf die Nadel ausgeübte Kraft hält die Nadel in ihrem Ruhezustand fest. Ein Strom I ($I \neq I_o$) durch die Spule induziert ein Magnetfeld, wodurch eine Kraft auf die Spule ausgeübt wird, die die Nadel zum Papier führt.

In Fig. 3 ist ein Ausführungsbeispiel des Treibers 24 dargestellt, das zum Beispiel einen oder mehrere monostabile Multivibratoren 105 enthält, die von einem impulsförmigen Steuersignal aus dem Mikroprozessor 10 gesetzt und rückgestellt werden. Dieser Multivibrator erzeugt dabei im einen Zustand über die Verbindung 23 einen Rechteckimpuls zum elektromechanischen Element 22. Dieses Element 22 enthält die Spulen 101 und für eine jede Spule einen Transistor 106. Der Deutlichkeit halber sind in Fig. 3 nur ein Transistor und eine Spule dargestellt. Der vom Multivibrator erzeugte Rechteckimpuls gelangt an die Basis des Transistors 106, der dadurch leitend wird, wodurch der Strom I durch die Spule fliesst und ein Magnetfeld in dieser Spule induziert. Wenn sich der Multivibrator im anderen Zustand befindet, ist der Transistor gesperrt.

Zum Untersuchen der Wirkungsweise des Druckkopfs des Matrixdruckers beim Schreiben des Buchstaben M werden folgende Funktionsschritte durchgeführt:

1. Die Messbereichssteuerung 28, die zum Beispiel einen Decoder enthält, wird angesteuert und schaltet eine geeignete Impedanz in das Messelement 20 zur Messung des Ruhestroms $I_o$. In Fig. 4 ist ein Ausführungsbeispiel eines derartigen Messelements dargestellt, in dem als Impedanzen Widerstände gewählt sind.

2. Der Analog/Digital-Wandler 26 wird angesteuert und der gemessene Ruhestrom $I_o$ wird in den RAM-Speicher 16 digital eingeschrieben.

3. Die Steuereinrichtung 10 erzeugt das Steuersignal zum Antreiben des Druckkopfs und zum Schreiben des Buchstaben M mit dem Druckkopf.

4. Zeitglied 12 wird auf die zum Schreiben des Buchstaben M erforderliche Zeit eingestellt.

5. Die Messbereichssteuerung 28 schaltet zum Messen des Stromes $I_M$ im Messelement 20 einen geeigneten Widerstand ein.

6. Nach dem Ausgangssignal des Zeitglieds 12 wird der A/D-Wandler 26 erneut angesteuert und der gemessene Wert $I_M$ in den Speicher der Steuereinrichtung 10 eingeschrieben.

7. Der gemessene Wert des Ruhestroms ($I_o$), der in den Speicher 16 eingeschrieben war, wird gelesen und die Steuereinrichtung 10 bestimmt die Differenz $I_M - I_o = I_{Mo}$.

8. Der in den Speicher 14 eingeschriebene Referenzwert $I_{RM}$ wird gelesen und die Steuereinrichtung vergleicht $I_{RM}$ mit $I_{Mo}$.

9. Wenn die Übereinstimmung zwischen dem Referenzwert und $I_{Mo}$ gut ist, läuft das Programm normal weiter. Wenn die Übereinstimmung nicht gut ist, wird eine Fehlersignalmeldung erzeugt. Bei diesem Vergleich können mögliche Toleranzen berücksichtigt werden. So ist es in diesem Beispiel, in dem Digitalwerte miteinander verglichen werden, möglich, dass der Bitwert des (der) niedrigstwertigen Bit(s) vernachlässigt wird.

10. Wenn eine Fehlersignalmeldung erzeugt wurde, wird sie beispielsweise durch das Aufleuchten einer Anzeigelampe am Drucker sichtbar gemacht.

**Patentansprüche**

1. Dateneingabe- oder Ausgabegerät für eine zentrale Datenverarbeitungsanlage, mit elektromechanischen Elementen, mit einer elektronischen Steuereinrichtung zum Austausch von Daten und Steuersignalen mit der zentralen Verarbeitungsanlage und zum Erzeugen von internen Steuersignalen zur Ansteuerung der elektromechanischen Elemente und mit einem Stromversorgungsgerät zur Lieferung der elektrischen Energie für die elektromechanischen Elemente, wobei für die Prüfung der elektromechanischen Elemente die Steuereinrichtung für ein elektromechanisches Element ein Ansteuersignal erzeugt und zumindest zu einem definierten Zeitpunkt nach dem Ansteuersignal einen Messwert einer Messeinrichtung übernimmt, mit mindestens einem Referenzwert vergleicht und bei vorgegebener Abweichung des gespeicherten Messwertes von dem Referenzwert ein Fehlersignal erzeugt, dadurch gekennzeichnet, dass die Messeinrichtung ein Messelement (20) enthält, das einen dem Stromversorgungsgerät (18) entnommenen Versorgungsstrom misst und Messwerte abgibt.

2. Dateneingabe- oder Ausgabegerät nach Anspruch 1, dadurch gekennzeichnet, dass die Steuereinrichtung (10) den Messwert der Messeinrichtung (20) unmittelbar vor und nach dem Ansteuersignal übernimmt und die Differenz zwischen den zwei gemessenen Messwerten mit einem gespeicherten Differenzwert vergleicht.

3. Dateneingabe- oder Ausgabegerät nach Anspruch 1 oder 2, dadurch gekennzeichnet, dass die Steuereinrichtung (10) für mindestens einige elektromechanische Elemente (22) ein derart kurzzeitiges Ansteuersignal erzeugt, dass eine gegenüber mechanischen Zustandsänderungen im normalen Betrieb nur unwesentliche mechanische Zustandsänderung des betreffenden Elements hervorgerufen wird.

4. Dateneingabe- oder Ausgabegerät nach Anspruch 1 oder 2, dadurch gekennzeichnet, dass die Steuereinrichtung (10) für mindestens einige elektromechanische Elemente (22) nach der Übernahme der Messwerte ein weiteres Ansteuersignal erzeugt, das eine Bewegung des betreffenden elektromechanischen Elements (22) in die Lage vor dem ersten Ansteuersignal auslöst.

5. Dateneingabe- oder Ausgabegerät nach einem der Ansprüche 2–4, dadurch gekennzeichnet, dass die Steuereinrichtung (10) mindestens einen Teil der Messwerte jeweils mit zwei gespeicherten Referenzwerten vergleicht und für den einen Referenzwert bei Überschreitung und für den anderen Referenzwert bei Unterschreitung durch die betreffende Messwerte ein Fehlersignal erzeugt.

6. Dateneingabe- oder Ausgabegerät nach einem der Ansprüche 2–5, dadurch gekennzeichnet, dass dem Messelement (20) ein Analog/Digital-Wandler (26) nachgeschaltet ist und dass die Steuereinrichtung (10) mindestens den unmittelbar vor einem Ansteuersignal übernommenen Messwert in einen digitalen Speicher (16) einschreibt.

7. Dateneingabe- oder Ausgabegerät nach Anspruch 6, dadurch gekennzeichnet, dass ein von der Steuereinrichtung (10) gesteuerter Messbereichsteuerung (28) das Messelement (20) bzw. den Analog/Digital-Wandler (26) auf einen bestimmten Messbereich einstellt.

8. Dateneingabe- oder Ausgabegerät nach Anspruch 1 oder einem der folgenden, dadurch gekennzeichnet, dass die Steuereinrichtung (10) ein Mikroprozessor ist, der durch ein im Festwertspeicher (14) gespeichertes Programm gesteuert wird.

9. Dateneingabe- oder Ausgabegerät nach Anspruch 8, dadurch gekennzeichnet, dass der Mikroprozessor (10) nach jeder Übernahme eines Messwertes ein programmierbares Zeitglied (12) ansteuert, das nach Ablauf der programmierten Zeitdauer ein Unterbrechungssignal zum Mikroprozessor (10) überträgt und diesen veranlasst, den nächsten Strommesswert zu übernehmen bzw. ein anderes Steuersignal für ein anderes elektromechanisches Element (22) zu erzeugen.

## Claims

1. A data input or output device for a central data processing system, comprising electromechanical elements, an electronic control device for the exchange of data and control signals with the central processing system and for generating internal control signals for the activtion of the electromechanical elements, and also comprising a power supply apparatus for supplying the electric energy for the electromechanical elements, wherein for the testing of the electromechanical elements the control device generates an activation signal for an electromechanical element, takes over a measurement value of a measuring device at least at a defined instant after the activation signal and compares this measurement value with at least one reference value, said control device generating an error signal in reaction to a predetermined deviation of the measurement value stored from the reference value, characterized in that the measuring device comprises a measuring element (20) which measures a supply current drained from the power supply apparatus (18) and which outputs measurement values.

2. A data input or output device as claimed in Claim 1, characterized in that the control device (10) takes over the measurement value of the measuring device (20) directly before and after the activation signal and compares the difference between the two measurement values with a stored difference value.

3. A data input or output device as claimed in Claim 1 or 2, characterized in that the control device (10) generates such a brief activation signal for at least some electromechanical elements (22) that only an unimportant change of the mechanical state of the relevant element occurs in comparison with changes of the mechanical state during normal operation.

4. A data input or output device as claimed in Claim 1 or 2, characterized in that the control device (10) generates a further activation signal for at least some electromechanical elements (22) after the taking over of the measurement values, said further activation signal initiating a movement of the relevant electromechanical element (22) to the position occupied before the first activation signal.

5. A data input or output device as claimed in any one of the Claims 2 to 4, characterized in that the control device (10) compares at least part of the measurement values with each time two reference values stored and generates an error signal when the relevant measurement signals exceed the one reference value or fail to exceed the other reference value.

6. A data input or output device as claimed in any one of the Claims 2 to 5, characterized in that the measuring element (20) is followed by an analog/digital converter (26), the control device (10) storing at least the measurement value taken over directly before an activation signal in a digital memory (16).

7. A data input or output device as claimed in Claim 6, characterized in that a measuring range controller (28) which is controlled by the control device (10) adjusts the measuring element (20) or the analog/digital converter (26) to a given measuring range.

8. A data input or output apparatus as clamimd in Claim 1 or any one of the subsequent Claims, characterized in that the control device (10) is a microprocessor which is controlled by a program stored in the read-only memory (14).

9. A data input or output device as claimed in Claim 8, characterized in that after each takeover of a measurement value, the microprocessor (10) activates a programmable timer (12) which applies an interrupt signal to the microprocessor (10) after expiration of the programmed period of time in order to make the microprocessor take over the next current measurement value or generate another control signal for another electromechanical element (22).

## Revendications

1. Dispositif d'entrée ou de sortie de données pour une unité centrale de traitement de données, comportant des éléments électromécaniques, un dispositif de commande électronique pour échanger des données et des signaux de commande avec l'unité centrale de traitement et pour produire des signaux de commande internes en vue d'activer les éléments électromécaniques, ainsi qu'un dispositif d'alimentation de courant pour fournir l'énergie électrique pour les éléments électromécaniques, étant entendu que pour la vérification des éléments électromécaniques, le dispositif de commande produit un signal d'activation pour un élément électromécanique et, au moins à un moment défini après le signal d'activation, prélève une valeur de mesure d'un dispositif de mesure, la compare à au moins une valeur de référence et, dans le cas d'une déviation préétablie de la valeur de mesure stockée et de la valeur de référence, produit un signal d'erreur, caractérisé en ce que le dispositif de mesure comprend un élément de mesure (20) qui mesure un courant d'alimentation provenant du dispositif d'alimentation de courant et donne des valeurs de mesures.

2. Dispositif d'entrée ou de sortie de données suivant la revendication 1, caractérisé en ce que le dispositif de commande (10) prélève la valeur de mesure du dispositif de mesure (20) immédiatement avant et après le signal d'activation et compare la différence entre les deux valeurs de mesure mesurées à une valeur de différence stockée.

3. Dispositif d'entrée ou de sortie de données suivant la revendication 1 ou 2, caractérisé en ce que le dispositif de commande (10), pour au moins quelques éléments électromécaniques (22), produit un signal d'activation de durée tellement courte que le changement d'état mécanique de l'élément en question est peu important par rapport au changement d'état mécanique au cours d'un fonctionnement normal.

4. Dispositif d'entrée ou de sortie de données suivant la revendication 1 ou 2, caractérisé en ce que le dispositif de commande (10) produit, pour au moins quelques éléments électromécaniques (2), après la reprise de la valeur de mesure, un autre signal d'activation qui déclenche un déplacement de l'élément électromécanique (22) en question dans la position précédant le premier signal d'activation.

5. Dispositif d'entrée ou de sortie de données suivant l'une quelconque des revendications 2 à 4, caractérisé en ce que le dispositif de commande (10) compare au moins une partie des valeurs de mesure chaque fois à deux valeurs de référence stockées et produit un signal d'erreur pour la première valeur de référence, lors d'un dépassement par excès et pour l'autre valeur de référence, lors d'un dépassement par défaut des valeurs de mesure en question.

6. Dispositif d'entrée ou de sortie de données suivant l'une quelconque des revendications 2 à 5, caractérisé en ce qu'un convertisseur analogique/numérique (26) est connecté en aval de l'élément de mesure (20) et le dispositif de commande (10) inscrit la valeur de mesure prélevée immédiatement avant un signal d'activation dans une mémoire numérique (16).

7. Dispositif d'entrée ou de sortie de données suivant la revendication 6, caractérisé en ce qu'une régulation de domaine de mesure commandée par le dispositif de commande (10) règle l'élément de mesure (20) ou le convertisseur analogique/numérique (26) sur un domaine de mesure déterminée.

8. Dispositif d'entrée ou de sortie de données suivant la revendication 1 ou l'une quelconque des revendications suivantes, caractérisé en ce que le dispositif de commande (10) est un microprocesseur qui est commandé par un programme stocké dans la mémoire fixe (14).

9. Dispositif d'entrée ou de sortie de données suivant la revendication 8, caractérisé en ce que le microprocesseur (10), après chaque reprise de valeur de mesure, active un élément à temps programmable (12) qui, au terme de la durée programmée, transmet un signal d'interruption au microprocesseur (10) et lui permet de reprendre la valeur de mesure de courant suivante ou de produire un autre signal de commande pour un autre élément électromécanique (22).

FIG.1

FIG.2a

FIG.2b

FIG.3

FIG.4